# EUROPEAN PATENT SPECIFICATION

(11) **EP 1 471 342 B1**
(45) Date of publication and mention of the grant of the patent: **12.08.2009**
(21) Application number: 03029971.3
(22) Date of filing: 30.12.2003
(51) Int. Cl.: G01M 3/22

(54) **Automatized system for the in-line detection of the losses on panels containing a cooling fluid circuit**
Automatisiertes System zur in-line Erfassung von Verlusten an Platten mit integriertem Kühlkreislauf
Système automatisé de détection en ligne de pertes de panneaux contenant un circuit de circulation d'un fluide de refroidissement

(30) Priority: 22.04.2003 IT UD20030089
(43) Date of publication of application: 27.10.2004
(73) Proprietor: C.G.A. COMPAGNIA GENERALE ALLUMINIO S.p.A., I-33043 Cividale del Friuli (IT)
(72) Inventor: Colugnati, Giorgio, 33043 Cividale del Friuli (UD) (IT)
(74) Representative: D'Agostini, Giovanni

(56) References cited:
- WO-A-99/10721
- DE-A1- 19 623 544
- US-A- 4 583 394

## Description

### Object

This invention refers to an automatized system for the in-line detection of losses on panels containing a circuit for receiving the circulation of a cooling fluid and intended for cooling air units, such as for example the panels obtained for in-line production with the "ROLL BOND" process universally known in refrigerator and freezer evaporator construction technology.

### Background art

The evaporator panel " ROLL BOND " is, and will be in the future one of the optimal solutions for the obtainment of a cold environment on the interior of domestic apparatuses (refrigerators and freezers).

The production process of this evaporator provides the sandwich superpositioning of two aluminium plates with an interposed design obtained by silk-screening with specially formulated ink. Said ink defines the zones in which the two superimposed plates must not connect in the preheating and lamination process that follows.

Once it has been laminated the sandwich appears as a single aluminium plate containing a design on the inside that later will become the channel within which the cooling gas will expand.

To transform said design into a channel it is necessary to blow in an air pressure between the two welded plates, on the interior of the silkscreened design, that varies depending on the complexity of the design and on the thickness of the two laminated plates that form the sandwich.

These air pressures can also reach considerable values 140 -150 bar, while the thickness of the superposed aluminum plates seldom reaches a millimetre in thickness.

### Drawbacks of the current known solutions

It immediately becomes evident that, although the inflation process occurs on the interior of suitable presses that delimit the expansion of the channels submitted to said pressures, often the channel yields to the excess pressure to which it is submitted thus tearing and causing insidious losses which lead to the discarding of the blank in the first phase, but that at the same time force integral type tests to be carried out on the finished product in order to be able to guarantee the user of the airtightness of the product supplied.

These loss tests, commonly known until now as " LEAK TEST ", can be carried out, with a certain reliability, only after a high level of completion of the evaporator, or only after the latter has undergone a series of works and the addition of expensive components.
The following prior art gas testing devices are pertinent to the present invention: DE19623544A1 (SCHROFF, GEHART..) and WO99/10721A (Caradon Stelrad Limited). The last one being really pertinent in disclosing an helium-pressure leak-testing for a radiator.
Also US4583394A (MURAKAMI et Al) disclose a device and method for a very fine helium/neon or hydrogen leak-detection through the walls by a capillary-tube sniffer nozzle.

Said works therefore add to the cost of a component that could potentially be rejected, a value that is lost when the test shows an unacceptable loss caused by the breaking of the channel during the inflation phase. Moreover, given that said tests are integral, they must be carried out with suitable high cost (both in terms of purchase and functioning) and low productivity apparatuses.

It is necessary to remember that if the component is not completed on the production line, but on the contrary is sold in delivery condition as a blank (squared or cut-off), the test cannot be carried out prior to delivery, but must be carried out by the end user, after the completion process with all the implications that permit the possible appearance of relevant losses.

### Problem to be solved

The problem is therefore to find a system that provides the product test immediately after the inflation phase and that guarantees that the advanced product is without losses, in a simple, fast (without interrumping the normal chain production process), effective and safe way. **Solution to the problem according to the present invention**

The problem is solved with a system according to the characteristics of the main claim, the subclaims constituting the preferred embodiments.

### Advantages of the new solution

The solution to the problem consists in the application of a hydrogen sensor, of a commonly known type available on the market, to a scanning system capable of analysing in-line the inflated panel and supplying results with a sensitivity so as to guarantee that the panel under consideration is free of microlosses, allowing not only in-line automatic production, but also the total control to 100 % of its tightness, thus guaranteeing supply.

In essence, pressurizing the panel channels after being connected, with a tracer gas mixture (nitrogen 95% hydrogen 5%) and passing it through said channels with an aspirator equipped with a hydrogen sensor, the presence of a percentage of hydrogen higher than a defined threshold (background noise) indicates the loss of tracer gas and therefore the presence of a perforation.

Therefore, this process can be carried out in-line without adding any complication or obstacle to the normal production cycle.

This solution guarantees that all the inflation processed panels are free from microlosses and therefore can be supplied to successive works as safe and tested panels that will not be the source of subsequent tearing due to airtightness faults in the inflated channel.

This technological plus adds value to the product in that it allows the elimination of the defective panels at the source and prevents the latter from reaching further working stages.

For these reason the panels (above all those squared or cut-off) can be sold with the tested product label " FIELD LEAK TESTED ", certifying that the panel has undergone the above-described test.

### Description of a preferred solution

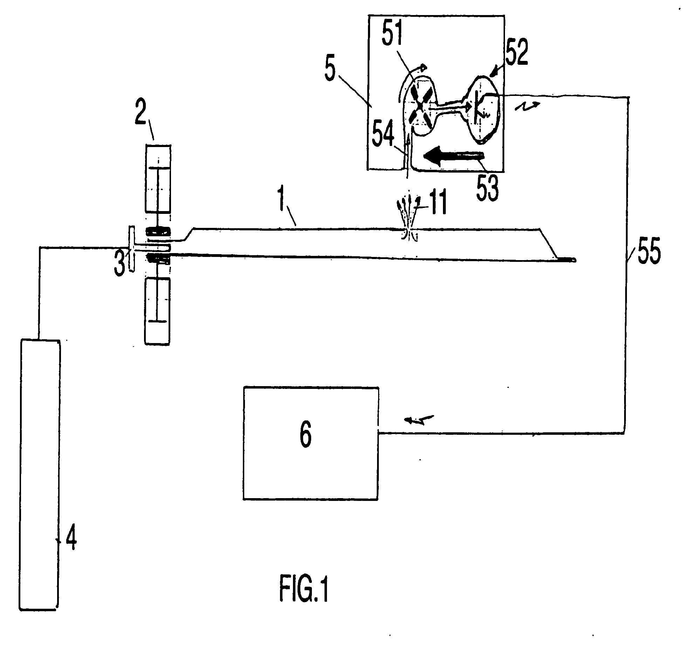

The invention will be now described in detail with the aid of the included Figure 1 illustrating a scheme of the system according to the invention.

As seen in Figure 1, the system includes:
Gripper unit (2-3) with pressure gas feed device (4) in the panel (1) made up of:
   - gripper or vice for pressurizing the panel to be mounted under the discharge bench press (2) made up of:

   - pneumatic lever for positioning in correspondence to the gripper carrying arm.
   - grippers with pneumatic grip
   - gas pressured charge nozzle (3) within the panel (1), the gas being made up of nitrogen + hydrogen originating from gas bottle storage (4).
   - micro-fumehood above the gripper and respective gripper area and connection for the feeding of the gas underpressure (4) to the panel (1), not illustrated.

The gripper (2) is collapsible (under the bench) and emerges from it centrally, after the passing of the panel during the discharge operation of the panel (1) to be checked.
The position of the gripper (2) is fixed.

The nozzle (3) is mounted centrally and has a diameter that facilitates the entrance of the inflated panel (1) when it is pushed against it.

The lateral alignment of the panel (1) is guaranteed by adequately modified discharge joggers (not illustrated, but technology known to the those skilled in this area).

The vertical alignment of the panel (1) is guaranteed by suitable guides (not illustrated), within which the panel is confined.

Once the nozzle is fitted, the gripper with plastic jaws (2) provides the connection sealing.

Moreover, the weak suction produced by said connection covering hood (not illustrated), guarantees the rapid scavenging of possible small losses in the gripping-sealing area.
Scanner unit (5) mounted on a trolley made up of:
- two tempered lateral guides of suitable length (4,5 metres) (not illustrated)
- trolley (53) sensor unit carrier (5) sliding on guides by alternating scanning movement and pulled by a chain with relative coils and cranks (not shown, but commonly known in the art of scanning)
- fixed geared motor and pinion with absolute encoder brushless motor machine
- panel (1) pusher with pneumatic activation (not shown)
- hydrogen sensor (52) connected to hydrogen meter (55-6), suction micropump unit (51), gas suction nozzles (54) for the detection of loss (11) and discharge. The hydrogen sensor (52) is connected to a loss signal transmission cable (55), by means of a chain cable carrier (not illustrated).

The scanner (5), being mounted on the trolley, slides on two guides fixed on the discharge bench and positioned parallel to the motion of the panel to cover the entire length of the bench and be able to follow the possible forward movement of the panel in the case of in-line production.

In this specific case, the motorization of the scanner can take place on the trolley by means of the pulling of a chain and a series of returning coils of which one is motorized with brushless and encoder for the relief of the position (known art solutions not illustrated).

The trolley in the resting position is at the end of its travel at a distance from the inflation press.

When the panel (1) is removed from the press (for deformation, formation of the channel, not illustrated, known in the art and of no specific interest to the present invention, in forming part of the normal in-line manufacturing process of the panel ), and the gripper carrying arm of said gripper unit (3-2) is in position, the support trolley of the respective panel (1) begins its upward stroke (toward the gripper unit 2-3) with a push blade in the "low" position. Said blade pushes the inflated panel until it fits onto the test gas inlet gripper (2-3).

Once the test position is reached, the blade is raised and the trolley with the panel (1) can reach the test start position.

The gripper (2) closes and supplies the test gas by means of the connection (3) to the already inflated panel orginating from the previous inflation station (known art not illustrated) in the normal in-line "ROLL-BOND" production processes.

Once the panel (1) is filled with gas containing hydrogen, the panel-carrying trolley (1) inverts its own motion and the loss sensor unit sensitive to hydrogen (5) is activated.

The inflated panel full of nitrogen and hydrogen under pressure (1), is sounded along its entire length until reaching the limit switch position, in the case of a detected loss the sensor (5) stops and sends a signal of "stop cycle after inflation" to the press upstream to allow the recognition of the perforated panel.

Connected to the system are means for the in-line advancement synchronisation in cooperation with the workstations, particularly upstream (press). In particular:
- feeding test gas synchronized with measuring operations for example with a measuring unit (6) for reading the scanner (5) signals;
- activation for brushless motor;
- software synchronization of the press cycle with the cycle test and discharge piece.

The start of the test cycle occurs by means of the inflated panel overcoming a sensor placed on the discharge bench panel.

Said sensor, conveniently optoelectronic, guarantees that the panel (1) is in a position ready for use for the start of the test cycle.
Cycle times
- Positioning of the open plastic-jaw gripper (high) 1 sec.
- Movement of the scanner towards the plate with blade downwards 3 sec.
- Slowdown and alignment with blade upwards 3 sec.
- Closure of the plastic-jaws vice (2) and test gas inlet while the scanner (5) reaches the start position test 5 sec.
- Start scanning at constant speed (200 mm/second) 15 sec.
- Limit switch panel (1) reaching the starting position (limit switch at a distance from the press) 3 sec.
- Maximum time provided 30 sec.

However, the details, the cycle parameters and adaptation to the line can obviously vary.
Advantageously also above the range area of said sensor means of said nitrogen-hydrogen gas mixture (5) a fume hood is provided.

## Claims

1. A method realizing an automatized process for the in-line detection of losses on evaporator panels (1) containing a circuit for receiving the circulation of a cooling fluid and intended for cooling air units, wherein the test process is performed in chain production process by a gas-detector scanning system, without interrupting the normal chain production process and wherein the gas detection is performed on line immediately after gas inflation phase; **characterised in that**, in the production line process of said panels (1) and downstream of a station for panel pressing and inflation (1) for the formation of the channels for cooling fluid circulation, into said panels (1), the following means are provided:
- a single plastic plastic-jaws vice making a gripper unit (2) of the end of said panel in its inlet area for the charging of said gas to be detected in its interior channel realizing a nitrogen-gas inflation phase with a plastic opposite-jaws sealing connection means with nozzle (3) to inject under pressure, from a delivering means (4) a nitrogen gas containing at least in partan hydrogen gas detectable by sensor means sensitive to the presence of said hydrogen gas (5);
- a single sensor means sensitive to said hydrogen gas (5) mounted in a relatively mobile way with respect to said panel (1), on which hydrogen losses (11) must be detected, by hydrogen scanning means to scan the concerned surface of the respective channels of said panel (1) and able to signal the possible presence of a respective hydrogen gas loss in a certain superficial position (11) on said panel (1), realizing a nitrogen-gas detection phase
and wherein:
i) the gas detection mixture is nitrogen 95% and hydrogen 5%;
ii) said sensor means comprising:
a) a single scanner unit (5) mounted on a trolley (53) for alternating scanning movement controlled by brushless motor machine:
b) suction nozzles (54) for losses detected (11);
c) a suction micropump unit (51) to such said losses detected (11) and discharge them to connected hydrogen sensor (52):
d) a transmission cable (55) to connect said hydrogen sensor (52) to an hydrogen meter (6),
iv) above said gripper unit (2) and said sealing connection means (3) and said sensor means sensitive to said hydrogen gas (5), a single fume hood is provided;
v) said sensor means of said nitrogen-hydrogen gas mixture (5) is movable on a trolley, sliding on guides for said alternate scanning and pulled by a chain with relative coil and crank in connection to said brushless motor machine;
vi) said suction nozzles (54) are directed towards the surface of the panel to be scanned (1);
vii) said hydrogen meter is intended for the management and regulation of the whole process;

2. A method according to claim 1, **characterized in that** the inflation and test phases are the following:
- positioning of the plastic-jaw gripper in open high position: 1 second;
- movement of the scanner towards the plate with blade downwards: 3 seconds;
- slowdown and alignment with blade upwards about 3 seconds;
- closure of the plastic-jaws vice gripper unit (2) and test gas inlet while the scanner (5) reaches the start position test: 5 seconds;
- start scanning at constant speed of 200 mm/second: 15 seconds;
- limit switch panel (1) reaching a starting position from an optoelectronic limit switch at a distance from the press: 3 seconds.

3. A production line plant to realize an automated process for the in-line detection of losses on panels (1) containing a circuit for receiving the circulation of a cooling fluid and intended for evaporator cooling air units, using a scanning means according to the method of claim 1 and or 2, **characterized in that** it comprises in a single production line:
I) a station for panel pressing and inflation (1) for the formation of the channels for cooling fluid circulation, into said panels (1), followed by;
II) a single gripper unit (2) of the end of said panel (1) in its inlet area for the charging of gas in its interior channel; said gripper unit including opposing jaws of substantially plastic material to form a seal in the connection area with charging nozzle of mixture of detector gas (3-4) by a pressure container (4), said gripper unit being associated to an optoelectronic advancing panel sensor means;
III) a single hydrogen sensor means sensitive (5) mounted in a relatively mobile way with respect to said panel (1), on which hydrogen losses (11) have to be detected, said hydrogen sensor means comprising a single scanner unit (5) mounted on a trolley (53) controlled by brushless motor machine and pulled by a chain with relative coil and crank in connection to said brushless motor machine, said scanner unit having:
a1) suction nozzles (54) for losses detecting (11) directed towards the surface of the panel to be scanned (1);
a2) a suction micropump unit (51) to such the losses detected (11) and discharge them to connected hydrogen sensor (52);
a3) a transmission cable (55) to connect said hydrogen sensor (52) to an hydrogen meter (6) connected to managing means of the line;
IV) a single fume hood is provided above said gripper unit (2) and said sealing connection means (3) and said sensor means sensitive to said hydrogen gas (5).

## Patentansprüche

1. Automatisches Verfahren für die In-Line-Detektion von Verlusten auf Verdampferplatten (1), die einen Kreislauf einer Kühlflüssigkeit enthalten, gedacht für Kühllufteinheiten, wobei das Testverfahren im Kettenproduktionsverfahren von einem Gasdetektorabtastsystem ausgeführt wird, ohne das normale Kettenproduktionsverfahren auszusetzen, und wobei die Gasdetektion online sofort nach der Gasfüllungsphase ausgeführt wird, **gekennzeichnet dadurch dass** in dem Fertigungsprozess für die Platten (1) und nachgeschaltet einer Station für Plattenpressen und -aufblasen (1) für die Bildung der Kanäle für den Kühlflüssigkeitsumlauf in den Platten (1) folgende Mittel vorgesehen sind:
- ein einzelner Kunststoffbacken-Schraubstock, der eine Greifereinheit (2) am Ende der Platte in ihrer Einlassfläche bildet, zur Ladung des Gases, das in ihren inneren Kanal ermittelt werden soll, so dass eine Stickstoff-Gas-Aufblasphase mit einem gegenüberliegenden Kunststoffbacken-Dichtungs-Verbindungsmittel mit Düse (3) entsteht, um aus einem Abgabemittel (4) ein Stickstoffgas unter Druck einzuspritzen, das zumindest teilweise ein Wasserstoffgas enthält, das von einem Sensor für Wasserstoffgas (5) ermittelt werden kann;
- ein einzelner Sensor, der für Wasserstoffgas empfindlich (5) und relativ beweglich in bezug auf die Platte (1) montiert ist, auf der Wasserstoffverluste (11) ermittelt werden sollen, von einem Wasserstoffabtastmittel, um die betroffene Oberfläche der betreffenden Kanäle der Platte (1) abzutasten und das mögliche Vorhandensein eines Wasserstoffgasverlusts in einer gewissen Oberflächenposition (11) auf besagter Platte (1) zu signalisieren, so dass eine Stickstoffgas-Detektionsphase entsteht,
und wobei:
i) die Gasdetektionsmischung Stickstoff 95% und Wasserstoff 5% ist;
ii) besagter Sensor folgendes umfasst:
a) eine einzelne Scannereinheit (5) auf einem Förderwagen (53) zur Abtast-Hin- und Herbewegung, der von einer Stromrichtermotormaschine kontrolliert wird;
b) Ansaugdüsen (54) für die ermittelten Verluste (11);
c) eine Ansaugmikropumpeneinheit (51) für die ermittelten Verluste (11), um sie dann an einen angeschlossenem Wasserstoffsensor (52) zu leiten;
d) ein Übertragungskabel (55), um den Wasserstoffsensor (52) mit einem Wasserstoffmessgerät (6) zu verbinden,
iv) oberhalb der Greifereinheit (2) und des Dichtungsverbindungsmittels (3) und des Sensors für Wasserstoffgas (5) ist eine einzelne Abzugshaube vorgesehen;
v) besagter Sensor für die Stickstoff-Wasserstoffgas-Mischung (5) ist auf einem Förderwagen beweglich, der auf Führungen gleitet, für die Alternativ-Abtastung, und von einer Kette mit Rolle und Kurbel in Verbindung mit besagter Stromrichtermotormaschine gezogen wird;
vi) die Ansaugdüsen (54) sind zur Oberfläche der abzutastenden Platte (1) hin gerichtet;
vii) besagtes Wasserstoffmessgerät ist für die Steuerung und Regulierung des ganzen Verfahrens bestimmt;

2. Verfahren nach Anspruch 1, **gekennzeichnet dadurch, dass** die Aufblas- und Testphasen die folgenden sind:
- Plazierung des Kunststoffbackengreifers in offener hoher Position: 1 Sekunde;
- Bewegung des Abtasters zu der Platte mit Messer nach unten: 3 Sekunden;
- Verlangsamung und Ausrichtung mit Messer nach oben etwa 3 Sekunden;
- Schließung der Kunststoffbacken-Schraubstockgreifereinheit (2) und des Testgaseinlasses, während der Abtaster (5) den Ausgangspositionstest erreicht: 5 Sekunden;
- Start der Abtastung bei konstanter Geschwindigkeit von 200 mm/Sekunde: 15 Sekunden;
- die Endschalterplatte (1) erreicht eine Ausgangsposition von einem optoelektronischen Endschalter in einem Abstand von der Presse: 3 Sekunden.

3. Fertigungsstraßen-Anlage zur Bildung eines automatisierten Verfahrens zur In-Line-Detektion von Verlusten auf Platten (1), die einen Kreislauf einer Kühlflüssigkeit enthalten, gedacht für Verdampferkühllufteinheiten, unter Verwendung eines Abtastmittels entsprechend dem Verfahren nach Anspruch 1
und/oder 2, **gekennzeichnet dadurch, dass** sie in einer einzelnen Fertigungsstraße folgendes umfasst:
I) eine Station zum Plattenpressen und -aufblasen (1) zur Bildung der Kanäle für den Kühlflüssigkeitsumlauf, in den Platten (1), gefolgt von;
II) einer einzelnen Greifereinheit (2) am Ende der Platte (1) in ihrer Einlassfläche zur Eingabe von Gas in ihren inneren Kanal; die Greifereinheit umfasst gegenüberliegende Backen aus im wesentlichen Kunststoff, um eine Dichtung in der Verbindungsfläche zu bilden, mit Ladedüse für die Mischung von Detektorgas (3-4) durch einen Druckbehälter (4), wobei besagte Greifereinheit mit einem optoelektronischen Sensor für die vorrückende Platte verbunden ist;
III) einem einzelnen Wasserstoffsensor (5), der relativ beweglich in bezug auf besagte Platte (1) montiert ist, auf der Wasserstoffverluste (11) ermittelt werden sollen, wobei der Wasserstoffsensor mit einer einzelnen Abtasteinheit (5) auf einen Förderwagen (53) montiert ist, der von einer Stromrichtermotormaschine kontrolliert wird und von einer Kette mit Rolle und Kurbel in Verbindung mit besagter Stromrichtermotormaschine gezogen wird, wobei besagte Abtasteinheit folgendes umfasst:
a1) Ansaugdüsen (54) zur Detektion von Verlusten (11), die zu der Oberfläche der abzutastenden Platte (1) hin gerichtet sind;
a2) eine Ansaugmikropumpeneinheit (51) zum Ansaugen der ermittelten Verluste (11), und um sie zu einem angeschlossenen Wasserstoffsensor (52) zu leiten;
a3) ein Übertragungskabel (55), um den Wasserstoffsensor (52) mit einem Wasserstoffmessgerät (6) zu verbinden, das mit dem Steuermittel der Linie verbunden ist;
IV) eine einzelne Abzugshaube ist oberhalb der Greifereinheit (2) und des Dichtungsverbindungsmittels (3) und des Sensors für Wasserstoffgas (5) vorgesehen.

## Revendications

1. Méthode pour la réalisation d'un procédé automatisé de détection en ligne de pertes sur des panneaux évaporateurs (1) contenant un circuit pour la réception de la circulation d'un fluide de refroidissement et destiné à des unités d'air de refroidissement, dans lequel le procédé de test est accompli en procédé de production à la chaîne par un système de balayage de détecteur de gaz, sans interrompre le procédé normal de production à la chaîne, et dans lequel la détection de gaz est accomplie en ligne aussitôt après la phase de gonflage de gaz, **caractérisée en ce que**, dans le procédé de chaîne de production desdits panneaux (1) et en aval d'une station pour le pressage et le gonflage de panneaux (1) pour la formation des canaux pour la circulation du fluide de refroidissement, dans lesdits panneaux (1), les moyens suivants sont pourvus:
- un seul étau de mâchoires en plastique formant une unité à pinces (2) de l'extrémité dudit panneau en sa zone d'entrée, pour le chargement dudit gaz à détecter en son canal intérieur, pour réaliser une phase de gonflage de gaz d'azote avec un moyen de connexion de fermeture de mâchoires opposées en plastique avec un gicleur (3) pour injecter sous pression, depuis un moyen de livraison (4), un gaz d'azote contenant au moins en partie un gaz hydrogène, détectable par des moyens capteurs sensibles à la présence dudit gaz hydrogène (5);
- un seul moyen capteur sensible au gaz hydrogène (5) monté d'une façon relativement mobile par rapport au panneau (1), sur lequel des pertes d'hydrogène (11) doivent être détectées, par les moyens de balayage d'hydrogène pour scruter la surface concernée des canaux respectifs dudit panneau (1) et capables de signaler la présence éventuelle d'une perte de gaz hydrogène respectif dans une certaine position superficielle (11) sur ledit panneau (1), pour réaliser une phase de détection de gaz d'azote
et où:
i) le mélange pour la détection du gaz est constitué d'azote 95% et d'hydrogène 5%;
ii) lesdits moyens capteurs comprenant :
a) une seule unité de balayage (5) montée sur un chariot (53) pour le mouvement de balayage alternatif contrôlé par une machine de moteur sans brosse;
b) des gicleurs d'aspiration (54) pour les pertes détectées (11);
c) une unité de micropompe d'aspiration (51) pour lesdites pertes détectées (11) et pour les décharger à un capteur d'hydrogène connecté (52);
d) un câble de transmission (55) pour connecter ledit capteur d'hydrogène (52) à un mesureur d'hydrogène (6),
iv) au-dessus de ladite unité à pinces (2) et dudit moyen de connexion de fermeture (3) et desdits moyens capteurs sensibles au gaz hydrogène (5), une seule hotte aspirante est prévue;
v) ledit moyen capteur dudit mélange à gaz d'hydrogène d'azote (5) est mobile sur un chariot, coulissant sur des guides pour ledit balayage alterné et tiré par une chaîne avec bobine et manivelle en connexion avec ladite machine à moteur sans brosse;
vi) lesdits gicleurs d'aspiration (54) sont dirigés vers la surface du panneau à balayer (1);
vii) ledit mesureur d'hydrogène est destiné à la gestion et à la régulation du procédé entier;

2. Méthode selon la revendication 1, **caractérisée en ce que** les phases de gonflage et de test sont les suivantes:
- positionnement de la pince de mâchoire plastique en position haute ouverte: 1 seconde;
- mouvement du balayeur vers le panneau avec lame vers le bas: 3 secondes;
- ralentissement et alignement avec la lame vers le haut approximativement 3 secondes;
- fermeture de l'unité à pinces à étau à mâchoires en plastique (2) et de l'entrée de gaz de test tandis que le balayeur (5) atteint la position de commencement du test: 5 secondes;
- commencement du balayage à une vitesse constante de 200 mm/seconde: 15 secondes;
- panneau d'interrupteur de fin de course (1) atteignant une position de départ d'un interrupteur de fin de course optoélectronique à une distance de la presse: 3 secondes.

3. Une installation de chaîne de production pour réaliser un procédé automatisé pour la détection en ligne de pertes sur des panneaux (1) contenant un circuit pour la réception de la circulation d'un fluide de refroidissement et destinée à des unités d'air de refroidissement à évaporateur, utilisant un moyen de balayage conformément à la méthode de revendication 1 et/ou 2, **caractérisé en ce qu'**elle comprend dans une seule chaîne de production:
I) une station pour le pressage et le gonflage de panneaux (1) pour la formation des canaux pour la circulation du fluide de refroidissement, dans lesdits panneaux (1), suivie par;
II) une seule unité à pinces (2) de l'extrémité dudit panneau (1) dans sa zone d'entrée pour le chargement du gaz dans son canal intérieur; ladite unité à pinces comprenant des mâchoires opposées substantiellement en matière plastique pour former un joint étanche dans la zone de connexion avec le gicleur de chargement du mélange de gaz détecteur (3-4) par un récipient de pression (4), ladite unité à pinces étant associée à un moyen capteur d'avancement de panneau optoélectronique;
III) un seul moyen capteur d'hydrogène sensible (5) monté de façon relativement mobile par rapport au panneau (1), sur lequel des pertes d'hydrogène (11) doivent être détectées, lesdits moyens de capteur d'hydrogène comprenant un seul balayeur (5) monté sur un chariot (53), contrôlé par machine à moteur sans brosse et tiré par une chaîne avec bobine et manivelle relative en connexion avec ladite machine à moteur sans brosse, ledit balayeur possédant:
a1) des gicleurs d'aspiration (54) pour détecter des pertes (11) dirigés vers la surface du panneau à balayer (1);
a2) une unité de micropompe d'aspiration (51) pour aspirer les pertes détectées (11) et les décharger à un capteur d'hydrogène (52) connecté;
a3) un câble de transmission (55) pour connecter ledit capteur d'hydrogène (52) à un mesureur d'hydrogène (6) connecté à un moyen de contrôlé de la ligne;
IV) une seule hotte aspirante est prévue au-dessus de ladite unité à pinces (2) et dudit moyen de connexion de fermeture (3) et dudit moyen capteur sensible au gaz hydrogène (5).
